(19)

**Europäisches Patentamt**

**European Patent Office**

**Office européen des brevets**

(11) **EP 4 234 614 A1**

(12) **EUROPEAN PATENT APPLICATION**

(43) Date of publication:
**30.08.2023 Bulletin 2023/35**

(21) Application number: **22158897.3**

(22) Date of filing: **25.02.2022**

(51) International Patent Classification (IPC):
**C08J 5/18** (2006.01)    **C08L 23/08** (2006.01)

(52) Cooperative Patent Classification (CPC):
(C-Sets available)
**C08J 5/18; C08F 210/16; C08L 23/06;**
**C08L 23/0815;** C08J 2323/08; C08J 2423/06;
C08L 2203/16; C08L 2205/025        (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **WANG, Jingbo**
**4021 Linz (AT)**
• **BERGER, Friedrich**
**4021 Linz (AT)**
• **ALABRUNE, Arnaud**
**92400 Courbevoie (FR)**
• **POTTER, Elisabeth**
**4021 Linz (AT)**

(74) Representative: **Kador & Partner Part mbB**
**Corneliusstraße 15**
**80469 München (DE)**

(54) **A FILM COMPRISING A POLYETHYLENE COMPOSITION HAVING IMPROVED GLOSS**

(57)    A polyethylene composition comprising a base resin comprising (A) 50 to 15 wt.-% of a polyethylene homo- or copolymer fraction with respect to the total weight of the base resin having a density determined according to ISO 1183-1:2004 (method A) of 955 to 980 $kg/m^3$ and a $MFR_2$ determined according to ISO 1133 at 190 °C and a load of 2.16 kg of 50 to 600 g/10 min; (C) 20 to 75 wt.-% of a polyethylene homo- or copolymer fraction with respect to the total weight of the base resin having a density determined according to ISO 1183-1:2004 (method A) of 942 to 970 $kg/m^3$ and a $MFR_2$ determined according to ISO 1133 at 190 °C and a load of 2.16 kg of 0.0001 to 1.0 g/10 min; and optionally, (B) 30 to 10 wt.-% of a polyethylene homo- or copolymer fraction with respect to the total weight of the base resin having a density determined according to ISO 1183-1:2004 (method A) of 955 to 980 $kg/m^3$ and a MFR2 determined according to ISO 1133 at 190 °C and a load of 2.16 kg of 100 to 2000 g/10 min.

EP 4 234 614 A1

(52) Cooperative Patent Classification (CPC): (Cont.)

C-Sets
**C08L 23/06, C08L 23/06, C08L 23/06;**
**C08L 23/0815, C08L 23/06, C08L 23/06**

## Description

### Field of the invention

The present invention relates to a polyethylene based film. The present invention also relates to the process for the production of said polyethylene based film.

### Background

Polyethylene films are widely used in packaging. These films must protect the contents of the package from damage and the environment. At the same time, the films must be able to provide good optical properties to allow visibility of the packaged articles.

Sustainability is becoming more and more important in the production of films. Hence, it is a general ambition to reduce the amount of material needed to provide a film with the same properties. Reduced amounts of material used result in less energy consumption in production and transport as well as generally less waste material per film. Furthermore, reducing the amount of material per film has also the effect of reducing costs. Generally, this can be achieved by producing films with lower thickness. However, this usually has the drawback that certain physical properties are sacrificed. Strength is the ability of a material to stay together when stretched or compressed. Stiffness is how well a material resists deformation. Toughness is the ability of a material to absorb energy before failure. Hence, to produce a film, which uses less polyethylene composition material, the strength, stiffness, and toughness of said polyethylene composition needs to be improved. To add to the challenge, however, these improvements must not be at the expense of processability of the polymer or the appearance of any film formed. Processability must be maintained or even improved to meet customer needs. Optical properties must also be maintained.

Multimodal high density polyethylene polymers are typically prepared in a two stage process, as described in, for example, WO 2014/180989 A1 and WO 2017/093390 A1. These methods may be preceded by a prepolymerization step. However, such produced materials suffer from relatively low densities and a not well-balanced combination of stiffness and toughness.

WO 2020/109289 A1 discloses a film made from a polyethylene composition comprising a base resin comprising a low molecular weight ethylene polymer component and a high molecular weight ethylene polymer component, wherein the high molecular weight ethylene polymer component has a higher weight average molecular weight than the low molecular weight ethylene polymer component, wherein the base resin has a density of at least 958.0 kg/m$^3$, and the polyethylene composition has a melt flow rate MFR$_2$ (190°C, 2.16 kg) of from 0.50 to 0.80 g/10 min and a molecular weight distribution being the ratio of the weight average molecular weight and the number average molecular weight, Mw/Mn, of from 10.0 to 15.0. The films show good processability, good mechanical and barrier properties and an improved balance of properties in regard of stiffness, ESCR, homogeneity, mechanical properties and barrier properties. However, the optical properties still can be improved.

### Object of the invention

It is therefore an object of the present invention to find a polyethylene based film, which overcomes the above-mentioned problems, i.e. having improved stiffness and toughness of the base resin at maintained processability and improved optical properties. It is a further object of the present invention to provide a process to produce said polyethylene based film.

### Summary of the invention

It has surprisingly been found that above-mentioned problem is solved by a film made from a multimodal polyethylene composition which has at least two polyethylene fractions having carefully selected ranges for molecular weight, density and melt flow rate.

The present invention therefore is directed to a film comprising a polyethylene composition comprising a base resin comprising

(A) 50 to 15 wt.-% of a polyethylene homo- or copolymer fraction with respect to the total weight of the base resin having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;

(C) 20 to 75 wt.-% of a polyethylene homo- or copolymer fraction with respect to the total weight of the base resin having a density determined according to ISO 1183-1:2004 (method A) of 942 to 970 kg/m$^3$ and a MFR$_2$ determined according to ISO 1133 at 190 °C and a load of 2.16 kg of 0.0001 to 1.0 g/10 min; and

optionally, a further fraction (B) 30 to 10 wt.-% of a polyethylene homo- or copolymer fraction with respect to the total weight of the base resin having a density determined according to ISO 1183-1:2004 (method A) of 955 to 980 kg/m$^3$ and a MFR$_2$ determined according to ISO 1133 at 190 °C and a load of 2.16 kg of 100 to 2000 g/10 min.

The present invention is further concerned with a process for producing the mentioned film, comprising the following steps:

(i) (co)polymerizing ethylene and optionally an alpha-olefin comonomer in a first polymerization step in the presence of a Ziegler-Natta polymerization catalyst to produce the fraction (A) having a density determined according to ISO 1183-1:2004 (method A) of 955 to 980 kg/m3 and a MFR$_2$ determined according to ISO 1133 at 190 °C and a load of 2.16 kg of 50 to 600 g/10 min;

(ii) optionally, (co)polymerizing ethylene and optionally an alpha-olefin comonomer in a further polymerization step in the presence of the fraction produced in previous step to produce the fraction (B) having a density determined according to ISO 1183-1:2004 (method A) of 955 to 980 kg/m$^3$ and a MFR$_2$ determined according to ISO 1133 at 190 °C and a load of 2.16 kg of 100 to 2000 g/10 min;

(iii)(co)polymerizing ethylene and optionally an alpha-olefin comonomer in a further polymerization step in the presence of the fraction produced in previous step to produce the fraction (C) having a density determined according to ISO 1183-1:2004 (method A) of 942 to 970 kg/m$^3$ and a MFR$_2$ determined according to ISO 1133 at 190 °C and a load of 2.16 kg of 0.0001 to 1.0 g/10 min, and obtaining the base resin comprising fractions (A) and (C), and optionally fraction (B);

(iv) extruding and pelletizing the base resin;

(v) producing a cast film with a thickness of 20-900 μm wherein the chill roll temperature is ranging between 30 to 95 °C, more preferably from 50 to 90 °C, and most preferably from 75 to 85 °C.

**Detailed description of the invention**

In the following, the present invention is described in detail, in particular, the polyethylene composition comprised in the film, the process for preparing the polyethylene composition, the polyethylene based film as well as the process for producing the polyethylene based film.

Film

The present invention relates to a polyethylene film, comprising, or consisting of, a polyethylene composition in any one of the embodiments as will be described below.

Moreover, the film of the present invention can be a monolayer or a multilayer film. In case the film is a monolayer film, the single layer of the film comprises, preferably consists of the polyethylene composition according to any embodiment as herein described. Likewise, in case the film is a multilayer film, at least one layer of the film comprises, preferably consists of the polyethylene composition according to any embodiment as herein described.

The film according to the present invention can be blown or cast film, preferably a cast film.

The film according the invention has a gloss value of at least 15, when gloss is determined at 60° according to ISO 2813, more preferably of from 15 to 100, most preferably of from 17 to 90, measured on a 750 μm test cast film.

Preferably, the film of the present invention has a thickness of 20 to 900 μm, more preferably of 150 to 850 μm, and most preferably of 500 to 800 μm.

The film according to the present invention preferably has a storage modulus measured according to ISO 6721-1 & ISO 6271-7 at 23 °C ranging between 650 MPa and 800 MPa, preferably between 700 MPa and 750 MPa, measured on a 750 μm test cast film. Moreover, the film according to the present invention preferably has a storage modulus measured according to ISO 6721-1 & ISO 6271-7 at 60 °C ranging between 200 MPa and 300 MPa, preferably between 250 MPa and 280 MPa, measured on a 750 μm test cast film. Likewise, the film according to the present invention preferably has a storage modulus measured according to ISO 6721-1 & ISO 6271-7 at 90 °C ranging between 90 MPa and 150 MPa, more preferably between 100 MPa and 125 MPa, measured on a 750 μm test cast film.

Polyethylene composition

It has been found that the polyethylene composition comprised by the film according to the present invention provides an improved material, which combines very good mechanical properties e.g. stiffness and toughness, with excellent processability, and hence good optical properties of the film is obtained.

The polyethylene composition of the polyethylene based film of the present invention comprises a base resin comprising:

(A) 50 to 15 wt.-% of a polyethylene homo- or copolymer fraction with respect to the total weight of the base resin having a density determined according to ISO 1183-1:2004 (method A) of 955 to 980 $kg/m^3$ and a $MFR_2$ determined according to ISO 1133 at 190 °C and a load of 2.16 kg of 50 to 600 g/10 min;

(C) 20 to 75 wt.-% of a polyethylene homo- or copolymer fraction with respect to the total weight of the base resin having a density determined according to ISO 1183-1:2004 (method A) of 942 to 970 $kg/m^3$ and a $MFR_2$ determined according to ISO 1133 at 190 °C and a load of 2.16 kg of 0.0001 to 1.0 g/10 min; and

optionally, a further fraction; (B) 30 to 10 wt.-% of a polyethylene homo- or copolymer fraction with respect to the total weight of the base resin having a density determined according to ISO 1183-1:2004 (method A) of 955 to 980 $kg/m^3$ and a $MFR_2$ determined according to ISO 1133 at 190 °C and a load of 2.16 kg of 100 to 2000 g/10 min.

By ethylene homopolymer is meant a polymer having mainly ethylene monomer units. Such polymer may contain up to 1 mol-% comonomer units, due to the fact that during polymerization some impurities may be present. Preferably, the homopolymer contains no comonomer units.

By ethylene copolymer is meant a polymer the majority by weight of which derives from ethylene monomer units, i.e. at least 50 wt.-% ethylene relative to the total weight of the copolymer. The comonomer contribution preferably is up to 10 mol-%, more preferably up to 5 mol-%. Ideally however there are very low levels of comonomer present in the polymers of the present invention such as maximum of 2.0 mol-%. The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene is particularly preferred, especially 1-butene. Ideally, there is only one comonomer present.

The polyethylene composition comprised by the film according to the present invention is multimodal, comprising at least two fractions. Usually, a polyethylene composition comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions the composition is consisting of.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions. Preferably, the polyethylene composition is a bimodal or a trimodal polyethylene composition.

Hence, when the base resin of the polyethylene composition is bimodal, it comprises two fractions (A) and (C). When the base resin of the polyethylene composition is trimodal, it comprises three fractions (A), (B) and (C).

Preferably, the polyethylene composition consists of the base resin.

*Fraction (A)*

Fraction (A) is a polyethylene homo- or copolymer, preferably a polyethylene homopolymer.

Fraction (A) preferably has a density, which is higher than the density of fraction (C).

The density of fraction (A) is in the range of 955 to 980 $kg/m^3$, preferably of 958 to 975 $kg/m^3$, and most preferably of 960 to 972 $kg/m^3$.

The fraction (A) has a melt flow rate $MFR_2$ of 50 to 600 g/10 min. Preferably, the fraction (A) has an $MFR_2$ of 500 g/10 min or less, more preferably 450 g/10 min or less, and most preferably 400 g/10 min or less. The fraction (A) preferably has a minimum $MFR_2$ of 100 g/10 min, more preferably at least 150 g/10 min, and most preferably at least 200 g/10 min. Thus, particularly suitable values of $MFR_2$ for fraction (A) are from 150 to 450 g/10 min, such as 200 to 400 g/10 min.

The fraction (A) is present in the base resin in an amount of 50 to 15 wt.-% with respect to the total weight of the base resin, preferably in an amount of 49 to 18 wt.-% with respect to the total weight of the base resin.

*Fraction (B)(optional)*

Fraction (B) is a polyethylene homo- or copolymer, preferably a polyethylene homopolymer.

The density of fraction (B) is in the range of 955 to 980 $kg/m^3$, preferably of 960 to 978 $kg/m^3$, and most preferably of 968 to 977 $kg/m^3$.

The fraction (B) has a melt flow rate $MFR_2$ of 100 to 2000 g/10 min. Preferably, the fraction (B) has an $MFR_2$ of 1500 g/10 min or less, more preferably 1300 g/10 min or less, and most preferably 1165 g/10 min or less. The fraction (B) preferably has a minimum $MFR_2$ of 150 g/10 min, more preferably at least 200 g/10 min, and most preferably at least 230 g/10 min. Thus, particularly suitable values of MFR2 for fraction (B) are from 200 to 1300 g/10 min, such as 230 to 1165 g/10 min.

In case of a trimodal base resin, the fraction (B) is present in the trimodal base resin in an amount of 30 to 10 wt.-% with respect to the total weight of the base resin, preferably in an amount of 28 to 15 wt.-% with respect to the total weight of the base resin.

*Fraction (C)*

Fraction (C) is a polyethylene homo- or copolymer, preferably a polyethylene copolymer. If fraction (C) is a polyethylene copolymer, the comonomer is preferably selected from the list consisting of 1-hexene, 1-octene and 1-butene. 1-butene is the most preferred comonomer.

Fraction (C) preferably has a density, which is lower than the density of fraction (A).

The density of fraction (C) is in the range of 942 to 970 $kg/m^3$, preferably of 949 to 960 $kg/m^3$, and most preferably of 951 to 955 $kg/m^3$.

The fraction (C) has a melt flow rate $MFR_2$ of 0.0001 to 1.0 g/10 min. Preferably, the fraction (C) has a $MFR_2$ of 0.8 g/10 min or less, more preferably 0.1 g/10 min or less, and most preferably 0.05 g/10 min or less. The fraction (C) preferably has a minimum $MFR_2$ of 0.001 g/10 min, more preferably at least 0.002 g/10 min, and most preferably at least 0.005 g/10 min. Thus, particularly suitable values of $MFR_2$ for fraction (C) are from 0.002 to 0.1 g/10 min, such as 0.005 to 0.05 g/10 min, most preferably even 0.01 to 0.04 g/10 min.

The fraction (C) is present in the base resin in an amount of 20 to 75 wt.-% with respect to the total weight of the base resin, preferably in an amount of 40 to 65 wt.-%, and most preferably in an amount of 50 to 60 wt.-%.

When the base resin of the polyethylene composition is bimodal, the combined fractions (A) and (C) are preferably present in the base resin in a weight ratio from 70:30 to 30:70, more preferably from 60:40 to 35:65, and most preferably from 50:50 to 40:60.

Base *resin*

The density of base resin is in the range of 956 to 970 $kg/m^3$, preferably of 957 to 965 $kg/m^3$; and most preferably of 958 to 962 $kg/m^3$. Hence, preferably, the base resin is a high density base resin. If the density is lower than this range, the physical properties as needed for films will be impaired, i.e. the film becomes too soft. If the density is higher than this range, the films may become too heavy.

The base resin has a $MFR_2$ of 4.0 g/10 min or less, preferably 3.5 g/10 min or less, more preferably 2.0 g/10 min or less and most preferably 1.9 g/10 min or less. The base resin has a minimum $MFR_2$ of 0.9 g/10 min, preferably at least 1.0 g/10 min, and most preferably at least 1.1 g/10 min. Thus, particularly suitable values of $MFR_2$ for base resin are from 0.9 to 4 g/10 min, more preferably from 1.0 to 3.5 g/10 min, most preferably from 1.1 to 1.9 g/10 min.

Preferably, the base resin has a $MFR_{21}$ of 150 g/10 min or less, more preferably 130 g/10 min or less, and most preferably 110 g/10 min or less. The base resin preferably has a minimum $MFR_{21}$ of 50 g/10 min, more preferably at least 55 g/10 min, and most preferably at least 60 g/10 min. Thus, particularly suitable values of $MFR_{21}$ for base resin are from 55 to 130 g/10 min, such as 60 to 110 g/10 min.

Preferably, the base resin has an $FRR_{21/2}$ of 75 or less, more preferably 70 or less, and most preferably 65 or less. The base resin preferably has a minimum $FRR_{21/2}$ of 35, more preferably at least 45, and most preferably at least 55. Thus, particularly suitable values of $FRR_{21/2}$ for base resin are from 45 to 70, such as 55 to 65.

In a preferred embodiment of the invention, the difference between the density of the fraction (A), respectively (A+B) a for trimodal base resin, and the fraction (C) is between 0.1 and 30 $kg/m^3$, more preferably between 5 and 25 $kg/m^3$, and most preferably between 10 and 20 $kg/m^3$. Density differences above these upper ranges can lead to compatibility problems between the fractions.

The base resin preferably has a z molecular weight Mz of 300,000 to 900,000 g/mol, more preferably of 550,000 to 750,000 g/mol, and most preferably of 560,000 to 610,000 g/mol. Likewise, the base resin preferably has a weight average molecular weight Mw of 90,000 to 200,000 g/mol, more preferably of 100,000 to 150,000 g/mol, and most preferably of 105,000 to 125,000 g/mol. The base resin preferably has a ratio of Mz/Mw of from 3 to 40, preferably from 4 to 20, and most preferably from 5 to 10, such as from 5 to 5.4.

The tensile modulus of the base resin preferably is at least 920 MPa, more preferably at least 950 MPa, and most preferably at least 1000 MPa. Typically, the tensile modulus of the base resin is not higher than 1300 MPa. The tensile modulus of the base resin preferably is not higher than 1500 MPa, preferably not higher than 1300 MPa, and most preferably not higher than 1200 MPa. Hence it is preferred that the tensile modulus of the base resin is between 920 MPa and 1500 MPa, preferably between 950 MPa and 1300 MPa, and most preferably between 1000 MPa and 1200 MPa.

The tensile strength at break of the base resin is preferably at least 23 MPa, more preferably at least 24 MPa, and most preferably at least 25 MPa. Typically, the tensile strength at break of the base resin is not higher than 40 MPa, more preferably not higher than 30 MPa, and most preferably not higher than 28 MPa. Hence it is preferred that the tensile strength at break of the base resin is between 23 MPa and 40 MPa, preferably between 24 MPa and 30 MPa, and most preferably between 25 MPa and 28 MPa.

The base resin preferably has an elongation at break of at least 300%, more preferably of at least 450%, and most preferably of at least 550%. If the elongation at break level is lower than these ranges, the stiffness properties are impaired. The base resin preferably has an elongation at break not higher than 1000%, more preferably not higher than 800% and most preferably not higher than 700%. Hence it is preferred that the base resin has an elongation at break of between 300% and 1000%, preferably between 450% and 800%, and most preferably between 500% and 700%.

Process for producing the film

The present invention furthermore relates to a process for producing a film from the polyethylene composition in any one of the above-described embodiments comprising the following steps:

(i) (co)polymerizing ethylene and optionally an alpha-olefin comonomer in a first polymerization step in the presence of a Ziegler-Natta polymerization catalyst to produce the fraction (A) having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;

(ii) optionally, (co)polymerizing ethylene and optionally an alpha-olefin comonomer in a further polymerization step in the presence of the fraction produced in previous step to produce the fraction (B) having a density determined according to ISO 1183-1:2004 (method A) of 955 to 980 kg/m$^3$ and a MFR$_2$ determined according to ISO 1133 at 190 °C and a load of 2.16 kg of 100 to 2000 g/10 min;

(iii) (co)polymerizing ethylene and optionally an alpha-olefin comonomer in a second polymerization step in the presence of the fraction produced in previous step to produce the fraction (C) having a density determined according to ISO 1183-1:2004 (method A) of 942 to 970 kg/m$^3$ and a MFR$_2$ determined according to ISO 1133 at 190 °C and a load of 2.16 kg of 0.0001 to 1.0 g/10 min, and obtaining the base resin;

(iv) extruding and pelletizing the base resin;

(v) producing a cast film with a thickness of 20-900 $\mu$m wherein the chill roll temperature is ranging between 30 to 95 °C, more preferably from 50 to 90 °C, and most preferably from 75 to 85 °C.

In steps (i) and (iii) optionally combined with step (ii), the base resin according to the present invention is obtained through multi-stage process. A multi-stage process as used herein is a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor, the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

The multi-stage process can be any combination of liquid phase, slurry phase and gas phase processes.

In the preferred multistage process, the lower molecular weight fractions (A) and (B) and the higher molecular weight fraction (C) are produced in different polymerization steps, in any order.

When the base resin is bimodal, the low molecular weight fraction (A) can be prepared in a first polymerization step and the high molecular weight fraction (C) in a second polymerization step. When the base resin is trimodal, the low molecular weight fraction (A) can be prepared in a first polymerization step, and the low molecular weight fraction (B) can be prepared in a second polymerization step, and the high molecular weight fraction (C) in a third polymerization step.

If a fraction is produced in the first polymerization step, the melt flow rate of said fraction can be directly measured as described herein. If said fraction is produced in the second step or following third step, the melt flow rate of the said fraction can be calculated on the basis of the weight ratio of said fraction and the fraction taken from the preceding polymerization step and the molecular weight of the total polyethylene composition.

In addition, subtracting GPC curves, when fractions of each polymer are known is also possible for determining melt flow rate of the polymer produced in the second stage of a multi-stage polymerization process.

Preferably, when the base resin is bimodal, the multistage process of the present invention is a slurry phase-gas phase process. Preferably, when the base resin is trimodal, the multistage process of the present invention is a slurry phase-slurry phase-gas phase process.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably, slurry phase polymerization is carried out in a loop reactor. In such reactors, the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably, the gas phase reactor for the second polymerization step is a fluidized bed reactor.

In a preferred embodiment of the invention, when the base resin is bimodal, the fraction (A) is produced first in step (i) and the fraction (C) is produced in the presence of fraction (A) in step (iii). In another preferred embodiment, when the base resin is trimodal, the fraction (A) is produced first in step (i), the fraction (B) is produced in the presence of fraction (A) in step (ii), and the fraction (C) is produced in the presence of fraction (B) in step (iii).

The resulting end product consists of an intimate mixture of the polymer fractions from the reactors, the different molecular-weight-distribution curves of these polymers together forming a molecular-weight-distribution curve having a broad maximum or several maxima, i.e. the end product is a multimodal polymer mixture.

It is preferred that the multimodal base resin of the polyethylene composition according to the invention is a bimodal polyethylene mixture consisting of polymer fractions (A) and (C), optionally further comprising a small pre-polymerization fraction. It is also preferred that this bimodal polymer mixture has been produced by polymerization as described above under different polymerization conditions in two or more polymerization reactors connected in series. Owing to the flexibility with respect to reaction conditions thus obtained, it is most preferred that the polymerization is carried out in a loop reactor/gas-phase reactor combination. It is also preferred that the multimodal base resin of the polyethylene composition according to the invention is a trimodal polyethylene mixture consisting of polymer fractions (A), (B) and (C), optionally further comprising a small pre-polymerization fraction.

According to a preferred embodiment of the invention, when the base resin is bimodal the process comprises a slurry-phase polymerization stage and a gas-phase polymerization stage. One suitable reactor configuration comprises one slurry reactor, preferably loop reactor, and one gas-phase reactor. In another preferred embodiment of the present invention, when the base resin is trimodal, the process comprises two slurry-phase polymerization stages and a gas-phase polymerization stage. One suitable reactor configuration comprises two slurry reactors, preferably loop reactors, and one gas-phase reactor.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa*s as diluent, as disclosed in WO 2006/063771 A1. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP 428 054 A1.

The polymerization in slurry usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art.

Furthermore, one or more α-olefin comonomers may be added into the reactor to control the density and morphology of the polymer product. The actual amount of such hydrogen and comonomer feeds depends on the desired melt index (or molecular weight) and density (or comonomer content) of the resulting polymer.

The polymerization in gas-phase may be conducted in a fluidized bed reactor, in a fast-fluidized bed reactor or in a settled bed reactor or in any combination of these.

Typically, the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

In addition, antistatic agent(s) may be introduced into the slurry and/or gas-phase reactor if needed.

The process may further comprise pre- and post-reactors.

The polymerization steps may be preceded by a pre-polymerization step. The pre-polymerization step may be conducted in slurry or in gas phase. Preferably, pre-polymerization is conducted in slurry, and especially in a loop reactor. The temperature in the pre-polymerization step is typically from 0 to 90 °C, preferably from 20 to 80 °C and more preferably from 30 to 70 °C.

The pressure is not critical and is typically from 1 to 150 bar, preferably from 10 to 100 bar.

The polymerization may be carried out continuously or batch wise, preferably the polymerization is carried out continuously.

In an example of the present process, polymerizing ethylene optionally with comonomers as herein discussed is accomplished in a multi-stage polymerization process comprising at least one slurry reactor and one gas-phase reactor.

A chain-transfer agent, preferably hydrogen, is added as required to the reactors, and preferably 10 to 450 moles of $H_2$ per one kmol of ethylene are added to the reactor, more preferably 50 to 330 moles of $H_2$ per one kmol of ethylene, and most preferably 90 to 380 moles of $H_2$ per one kmol of ethylene when the fraction (A) is produced in this reactor, and 10 to 700 moles of $H_2$ per one kmol of ethylene, more preferably 50 to 600 moles of $H_2$ per one kmol of ethyleneand most preferably 90 to 560 moles of $H_2$ per one kmol of ethylene are added to the reactor when fraction (B) is produced, and 1 to 200 moles of $H_2$ per one kmol of ethylene, preferably 10 to 160 moles of $H_2$ per one kmol of ethylene, are added to the gas phase reactor when this reactor is producing the fraction (C).

The polymerization is conducted in the presence of an olefin polymerization catalyst. The catalyst preferably is a Ziegler-Natta (ZN) catalyst which generally comprises at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1 378 528 A1, preferably Example 1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. Especially preferred titanium compound is titanium tetrachloride.

The catalyst can be prepared by sequentially contacting the carrier with the above mentioned compounds, as described in EP 688 794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810 235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1,000 mol/mol, preferably from 3 to 100 mol/mol and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, or isomers or mixtures thereof. Internal organic compounds are also often called as internal electron donors.

In a preferred embodiment of the invention, the polyethylene composition comprises further additives in amount of 3 wt.-% or less based on the total weight of the polyethylene composition, more preferred of 2.5 wt.-% or less, and most preferred of 2 wt.-% or less. Usually, the amount of additives in the polyethylene composition is not lower than 0.01 wt.-% or less.

The composition of the invention preferably is produced in a process comprising a compounding step, wherein the composition, i.e. the blend, which is typically obtained as a polyolefin base resin powder from the reactor, is extruded in an extruder, and then pelletized to polymer pellets as given in step (iv) of the process in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In certain embodiments, in said extrusion step the SEI (specific energy input) of the extruder may be 100 kWh/ton to 400 kWh/ton, more preferably 150 kWh/ton to 300 kWh/ton.

The melt temperature in said extrusion step is preferably 200 °C to 300 °C, more preferably 230 °C to 270 °C.

As given in step (v) of the process according to present invention, the films are produced by cast film process, with an airknife/chrill roll configuration. The melt temperature in this step ranges from 220 to 320 °C, more preferably from 240 to 300 °C, and most preferably from 265 to 275 °C. The output rate can be ranging from 5 kg/h to 50 kg/h, more preferably from 10 kg/h to 40 kg/h, and most preferably from 15 kg/h to 25 kg/h. The melt pressure, on the other hand, is not higher than 180 bar, more preferably ranges from 100 to 180 bar, even more preferably from 120 to 178 bar, and most preferably from 140 to 175 bar. And finally, the chill roll temperature in step (v) ranges between 30 and 95 °C, more preferably from 50 to 90 °C, and most preferably from 75 to 85 °C. When the chill roll temperature is lower than 30 °C, the optical properties of the film are negatively influenced. The film thickness produced as a result of this step (v) ranges between 20 and 900 $\mu$m, more preferably between 150 and 850 $\mu$m, and most preferably between 500 and 800 $\mu$m.

Unless explicitly described otherwise, the description of the present invention is to be understood so that one or more of any of the above described preferred embodiments of the invention can be combined with the invention described in its most general features.

In the following, the measurement and determination methods for the parameters as used herein are given and the present invention is further illustrated by way of example and comparative example.

**Examples**

Measurement methods

*a) Melt flow rate*

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg (MFRs) or 21.6 kg ($MFR_{21}$).

The quantity FRR (flow rate ratio) is an indication of molecular weight distribution and denotes the ratio of flow rates at different loadings. Thus, $FRR_{21/2}$ denotes the value of $MFR_{21}/MFR_2$.

*b) Calculation of melt flow rate $MFR_2$ of polymer fractions:*

$$MFR_2 = 10^{\left[\frac{\log(MFR_{1+2}) - w_1 \, x \, \log(MFR_1)}{w_2}\right]}$$

wherein

$w_1$      is the weight fraction [wt.-%] of a polymer fraction 1,
$w_2$      is the weight fraction [wt.-%] of a polymer fraction 2,
$MFR_1$      is the melt flow rate $MFR_2$ (190 °C) [g/10 min] of the polymer fraction 1,
$MFR_{1+2}$      is the melt flow rate $MFR_2$ (190 °C) [g/10 min] of the combined fractions 1 and 2,
$MFR_2$      is the calculated melt flow rate $MFR_2$ (190 °C) [g/10 min] of the polymer fraction 2.

c) *Density*

Density of the polymer was measured according to ISO 1183-1:2004 (method A) on compression moulded specimen prepared according to EN ISO 1872-2 (Feb 2007) and is given in $kg/m^3$.

d) *Calculation of density of polymer fractions:*

$$\rho_2 = \frac{(\rho_{1+2} - \rho_1)\dfrac{1-w_2}{100}}{w_2}$$

wherein

$w_2$      is the weight fraction [wt.-%] of a polymer fraction 2,
pi      is the density [$kg/m^3$] of the polymer fraction 1,
$\rho_{1+2}$      is the density [$kg/m^3$] of the combined fractions 1 and 2,
$\rho_2$      is the calculated density [$kg/m^3$] of the polymer fraction 2.

e) *Molecular weight properties*

Molecular weight averages (Mz, Mw and Mn), Molecular weight distribution (MWD) and its broadness, described by polydispersity index, PDI=Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N}(A_i \, x \, M_i)}{\sum A_i}$$

$$M_z = \frac{\sum_{i=1}^{N}(A_i \, x \, M_i^2)}{\sum (A_i/M_i)}$$

For a constant elution interval $\Delta V_i$, where $A_i$ and $M_i$ are the chromatographic peak slice area and polyolefin molecular weight (MW).

A PolymerChar GPC instrument, equipped with infrared (IR) detector was used with 3x Olexis and 1x Olexis Guard columns from Polymer Laboratories and 1,2,4-trichlorobenzene (TCB, stabilized with 250 mg/l 2,6-Di-tert-butyl-4-methylphenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

*f) Tensile modulus, tensile strength and elongation at break*

The tensile properties (tensile modulus, tensile strength, elongation at break) were determined according to ISO 527-2 on 1A ISO 527-2 dogbones. Following the standard, a test speed of 1 mm/min was used for tensile modulus and 50 mm/min for all other properties. The testing temperature was 23±2 °C. Injection moulding was carried out according to ISO 17855-2.

*g) Optical Properties*

Gloss as a measure for the optical appearance of the films was determined according to ISO 2813 (gloss) on films with thickness of 750 micrometer produced as described below. The gloss of the films was determined according to ISO 2813 at an angle of 60°. As per ISO 2813, three measurement angles (20°, 60°, and 85°) can be done by BYK-Gardner Micro-TRI-Gloss Meter and gloss values of 60° is recorded and reported as gloss units (GU).

*h) Storage modulus*

The storage modulus are done according to the ISO 6721-1 & ISO 6721-7 on the films produced below. The specimens were cut from the cast film along the machine direction, with a width of 10 mm, length 60 mm, thickness of 750 $\mu$m. The measurement was done on Anton Paar MCR301, in the temperature range from -130 °C to melting of the films (G' < 1MPa), the heating rate is 2 °C/min, frequency 1 Hz. All measurements were done under $N_2$ atmosphere.

Materials

Polymerization conditions and properties of the produced base resins and polyethylene compositions of the inventive and comparative examples are shown in Tables 1 and 2, respectively. Film properties are given in Table 3.

*a) CE1*

CE1 is BorePure™ MB5568, which is a bimodal HDPE commercially available from Borealis AG, with density of 955 kg/m$^3$ and $MFR_2$ determined according to ISO 1133 at 190 °C and a load of 2.16 kg of 0.8 g/10 min.

*b) Catalyst A*

Catalyst A was prepared according to Example 1 of EP 1 378 528 A1.

*c) IE1-2*

The base polymer of IE1 was prepared in a Borstar pilot plant, with a reactor chain comprising a pre-polymerizing reactor, a loop reactor, and a gas phase reactor. The base polymer of IE2, on the other hand, was prepared in a Borstar pilot plant, with a reactor chain comprising a pre-polymerizing reactor, a first loop reactor, a second loop reactor and a gas phase reactor. The reactor conditions such as temperature, pressure, and the concentration of monomers as provided in Table 1 were used.

*d) Extruding and pelletizing*

The base resins of the Inventive Examples IE1-2 and the Comparative Example CE1 were extruded and pelletized as described below.

The compounding was done under nitrogen atmosphere to pellets by using a JSW extruder so that the SEI was 230 kWh/kg and the melt temperature 250 °C. The IEs contain1000 ppm of Irganox B561 (BASF) and 400 ppm of Ceasit SW (Baerlocher) as antioxidants and acid scavenger, respectively.

Table 1

| Example | | IE1 | IE2 |
|---|---|---|---|
| Catalyst | | A | A |

(continued)

| Prepolymerization reactor | | | |
|---|---|---|---|
| Temperature | °C | 70 | 70 |
| Pressure | kPa | 5682 | 5757 |
| **First Loop reactor** | | | |
| Temperature | °C | 95 | 95 |
| Press. | kPa | 5367 | 5537 |
| C2 conc. | mol% | 4.0 | 3.6 |
| H2/C2 ratio | mol/kmol | 329 | 364 |
| Split | wt.-% | 47.4 | 19.0 |
| $MFR_2$ | g/10 min | 243 | 251 |
| **Second Loop reactor** | | | |
| Temperature | °C | | 95 |
| Press. | kPa | | 5343 |
| C2 conc. | mol% | | 2.4 |
| H2/C2 ratio | mol/kmol | | 545 |
| Split | wt.-% | | 25.4 |
| $MFR_2$ | g/10 min | | 600 |
| **Gas phase reactor** | | | |
| Temp | °C | 85 | 85 |
| Pressure | kPa | 2000 | 2000 |
| H2/C2 ratio | mol/kmol | 155 | 144 |
| C4/C2 ratio | mol/kmol | 11 | 14 |
| Split | wt.-% | 52.6 | 55.6 |

Some of the properties measured or calculated for IE1, IE2 and CE1 are presented below in Table 2.

Table 2

| | | IE1 | IE2 | CE1 |
|---|---|---|---|---|
| **First loop reactor (fraction (A))** | | | | |
| Density (A)[+] | kg/m$^3$ | 970.5 | 962 | 970 |
| $MFR_2$ (A)[+] | g/10 min | 243 | 251 | 400 |
| **Second loop reactor (fraction (B))** | | | | |
| Density (B)* | kg/m$^3$ | | 976.1 | |
| $MFR_2$ (B)* | g/10 min | | 1160.1 | |
| Density (A+B) [+] | kg/m$^3$ | | 970 | |
| $MFR_2$ (A+B) [+] | g/10 min | | 600 | |
| **Gas phase reactor (fraction (C))** | | | | |
| Density (C)* | kg/m$^3$ | 953.9 | 952.7 | 940.6 |
| $MFR_2$ (C)* | g/10 min | 0.021 | 0.0083 | 0.002 |

(continued)

| Extruder / Pelletizer | | | | |
|---|---|---|---|---|
| Density (A+C)[+#] | kg/m$^3$ | 961.8 | | 955 |
| Density (A+B+C)[+#] | kg/m$^3$ | | 960.4 | |
| $\Delta$density(A-C) | kg/m$^3$ | 16.6 | | 29.4 |
| $\Delta$density((A+B)-C) | kg/m$^3$ | | 17.3 | |
| MFR$_2$ (A+C)[+#] | g/10 min | 1.8 | | 0.8 |
| MFR$_2$ (A+B+C)[+#] | g/10 min | | 1.2 | |
| MFR$_{21}$ (A+C)[+#] | g/10 min | 105 | | 47.6 |
| MFR$_{21}$ (A+B+C)[+#] | g/10 min | | 68.7 | |
| FRR | | 57.1 | 57.3 | 59.5 |
| Mz[#] | | 596500 | 601500 | 708000 |
| Mw[#] | | 110000 | 120000 | 127000 |
| Mz/Mw[#] | | 5.4 | 5.0 | 5.6 |
| Tensile Modulus | MPa | 1035 | 1000 | 950 |
| Tensile Strength | MPa | 25.6 | 25.5 | 23.9 |
| Elongation at break | % | 655 | 506 | 130 |
| * Calculated<br>[+] Measured<br>[#] Measured from pellets | | | | |

e) Films

The films are produced at a Collin 30 lab scale line, with an airknife/chrill roll configuration. The melt temperature is set to 270 °C, output rate to 20 kg/h. The thickness of the films was 750 $\mu$m. IE3 and IE4 were prepared from IE1 and IE2, respectively. CE2, on the other hand, was prepared from CE1. In addition, CE3 was produced from IE2, with the difference in the chill roll temperature. Table 3 below presents process conditions for production of films and some of their properties measured.

Table 3

| | | IE3 | IE4 | CE2 | CE3 |
|---|---|---|---|---|---|
| Resin | | IE1 | IE2 | CE1 | IE2 |
| Output rate | kg/h | 20 | 20 | 20 | 20 |
| Melt temperature | °C | 270 | 270 | 271 | 270 |
| Chill roll temperature | °C | 80 | 80 | 80 | 25 |
| Melt pressure | bar | 139 | 170 | 175 | 170 |
| Gloss (60°) | | 29 | 18 | 14 | 6 |
| Storage modulus (23 °C) | MPa | 713 | 702 | 646 | 619 |
| Storage modulus (60 °C) | MPa | 265 | 256 | 234 | 231 |
| Storage modulus (90 °C) | MPa | 107 | 102 | 89 | 91 |

Compared to film CE2, the benefits of films IE3 and IE4 can be retreived from Table 3. The melt pressure values for IE3 and IE4 are lower than for CE2. Therefore, a higher production rate is possible. The quality of the films is excellent, as the gloss value is higher for films IE3 and IE4 in comparison to CE2.

If the chrill roll temperature is too low, e.g. 25 °C, the quality of films is reduced, as the gloss is at 6 in example CE3 and 18 in case of IE4.

**Claims**

1. A film comprising a polyethylene composition comprising a base resin comprising:

   (A) 50 to 15 wt.-% of a polyethylene homo- or copolymer fraction with respect to the total weight of the base resin having a density determined according to ISO 1183-1:2004 (method A) of 955 to 980 $kg/m^3$ and a $MFR_2$ determined according to ISO 1133 at 190 °C and a load of 2.16 kg of 50 to 600 g/10 min;
   (C) 20 to 75 wt.-% of a polyethylene homo- or copolymer fraction with respect to the total weight of the base resin having a density determined according to ISO 1183-1:2004 (method A) of 942 to 970 $kg/m^3$ and a $MFR_2$ determined according to ISO 1133 at 190 °C and a load of 2.16 kg of 0.0001 to 1.0 g/10 min; and

   optionally, (B) 30 to 10 wt.-% of a polyethylene homo- or copolymer fraction with respect to the total weight of the base resin having a density determined according to ISO 1183-1:2004 (method A) of 955 to 980 $kg/m^3$ and a $MFR_2$ determined according to ISO 1133 at 190 °C and a load of 2.16 kg of 100 to 2000 g/10 min.

2. Film according to claim 1, wherein the film is a cast film.

3. Film according to any of the preceding claims, wherein the film has a gloss value of at least 15, when gloss is determined at 60° according to ISO 2813, more preferably of from 15 to 100, even more preferably of from 17 to 90, measured on a 750 $\mu$m test cast film.

4. Film according to any of the preceding claims, wherein the film has a storage modulus measured according to ISO 6721-1 & ISO 6271-7 at 23 °C ranging between 650 MPa and 800 MPa, preferably between 700 MPa and 750 MPa, measured on a 750 $\mu$m test cast film.

5. Film according to any of the preceding claims, wherein the film has a storage modulus measured according to ISO 6721-1 & ISO 6271-7 at 60 °C ranging between 200 MPa and 300 MPa, preferably between 250 MPa and 280 MPa, measured on a 750 $\mu$m test cast film.

6. Film according to any of the preceding claims, wherein the film has a storage modulus measured according to ISO 6721-1 & ISO 6271-7 at 90 °C ranging between 90 MPa and 150 MPa, more preferably between 100 MPa and 125 MPa, measured on a 750 $\mu$m test cast film.

7. Film according to any of the preceding claims, wherein the base resin has a density determined according to ISO 1183-1:2004 (method A) of 956 to 970 $kg/m^3$, preferably of 957 to 965 $kg/m^3$; and most preferably of 958 to 962 $kg/m^3$.

8. Film according to any of the preceding claims, wherein the base resin has a $MFR_2$ determined according to ISO 1133 at 190 °C and a load of 2.16 kg of 0.9 to 4.0 g/10 min, preferably of 1.0 to 3.5 g/10 min, and most preferably 1.1 to 1.9 g/10 min.

9. Film according to any of the preceding claims, wherein the base resin has $MFR_{21}$ determined according to ISO 1133 at 190 °C and a load of 2.16 kg of 55 to 130 g/10 min, preferably of 60 to 110 g/10 min.

10. Film according to any of the preceding claims, wherein the base resin has $FRR_{21/2}$ of 45 to 70, preferably of 55 to 65.

11. Film according to any of the preceding claims, wherein the base resin has the difference between the density of the fraction (A) and the fraction (C), or the difference between the combination of fraction (A+B) and the fraction (C) is between 0.1 and 30 $kg/m^3$, more preferably between 5 and 25 $kg/m^3$, and most preferably between 10 and 20 $kg/m^3$.

12. Film according to any of the preceding claims, wherein the base resin has a tensile modulus determined according to ISO 527-2 ranging between 920 MPa and 1500 MPa, preferably between 950 MPa and 1300 MPa, and most preferably between 1000 MPa and 1200 MPa.

13. Film according to any of the preceding claims, wherein the base resin has tensile strength at break determined according to ISO 527-2 ranging between 23 MPa and 40 MPa, preferably between 24 MPa and 30 MPa, and most preferably between 25 MPa and 28 MPa.

14. Film according to any of the preceding claims, wherein the base resin has an elongation at break determined according to ISO 527-2 ranging between 300% and 1000%, preferably between 450% and 800%, and most preferably between 500% and 700%.

15. A process for producing a film according to claims 1-14, comprising the following steps:

(i) (co)polymerizing ethylene and optionally an alpha-olefin comonomer in a first polymerization step in the presence of a Ziegler-Natta polymerization catalyst to produce the fraction (A) having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;
(ii) optionally, (co)polymerizing ethylene and optionally an alpha-olefin comonomer in a further polymerization step in the presence of the fraction produced in previous step to produce the fraction (B) having a density determined according to ISO 1183-1:2004 (method A) of 955 to 980 kg/m$^3$ and a MFR$_2$ determined according to ISO 1133 at 190 °C and a load of 2.16 kg of 100 to 2000 g/10 min;
(iii) (co)polymerizing ethylene and optionally an alpha-olefin comonomer in a further polymerization step in the presence of the fraction produced in previous step to produce the fraction (C) having a density determined according to ISO 1183-1:2004 (method A) of 942 to 970 kg/m$^3$ and a MFR$_2$ determined according to ISO 1133 at 190 °C and a load of 2.16 kg of 0.0001 to 1.0 g/10 min, and obtaining the base resin comprising fractions (A) and (C), and optionally fraction (B);
(iv) extruding and pelletizing the base resin;
(v) producing a cast film with a thickness of 20-900 $\mu$m, wherein the chill roll temperature is ranging between 30 to 95 °C, more preferably from 50 to 90 °C, and most preferably from 75 to 85 °C.

Europäisches
Patentamt

European
Patent Office

Office européen
des brevets

**EUROPEAN SEARCH REPORT**

Application Number

EP 22 15 8897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 950 241 A1 (BOREALIS TECH OY [FI]) 30 July 2008 (2008-07-30) * paragraphs [0001] - [0003], [0011] - [0014]; claims; examples * ----- | 1-15 | INV. C08J5/18 C08L23/08 |
| A | US 2015/051364 A1 (VAHTERI MARKKU [FI] ET AL) 19 February 2015 (2015-02-19) * paragraph [0015]; claims; examples * ----- | 1-15 | |
| A | WO 2013/007619 A1 (TOTAL RES & TECHNOLOGY FELUY [BE]; VANTOMME AURELIEN [BE] ET AL.) 17 January 2013 (2013-01-17) * page 1, lines 3-19; claims; examples * ----- | 1-15 | |

TECHNICAL FIELDS
SEARCHED       (IPC)

C08J
C08L

The present search report has been drawn up for all claims

| Place of search | Date of completion of the search | Examiner |
|---|---|---|
| Munich | 5 August 2022 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 8897

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2022

| Patent document cited in search report | | | Publication date | Patent family member(s) | | | Publication date |
|---|---|---|---|---|---|---|---|
| EP 1950241 | A1 | | 30-07-2008 | AT | 549375 | T | 15-03-2012 |
| | | | | CN | 101600761 | A | 09-12-2009 |
| | | | | EP | 1950241 | A1 | 30-07-2008 |
| | | | | EP | 2106421 | A1 | 07-10-2009 |
| | | | | ES | 2380158 | T3 | 09-05-2012 |
| | | | | US | 2010099824 | A1 | 22-04-2010 |
| | | | | WO | 2008089978 | A1 | 31-07-2008 |
| US 2015051364 | A1 | | 19-02-2015 | BR | 112014023559 | A2 | 20-06-2017 |
| | | | | CN | 104395394 | A | 04-03-2015 |
| | | | | EP | 2831167 | A1 | 04-02-2015 |
| | | | | ES | 2657137 | T3 | 01-03-2018 |
| | | | | KR | 20150003753 | A | 09-01-2015 |
| | | | | US | 2015051364 | A1 | 19-02-2015 |
| | | | | WO | 2013144324 | A1 | 03-10-2013 |
| WO 2013007619 | A1 | | 17-01-2013 | BR | 112014000435 | A2 | 14-02-2017 |
| | | | | CA | 2839965 | A1 | 17-01-2013 |
| | | | | CN | 103781838 | A | 07-05-2014 |
| | | | | DK | 2729525 | T3 | 02-01-2020 |
| | | | | EA | 201490227 | A1 | 30-04-2014 |
| | | | | EP | 2729525 | A1 | 14-05-2014 |
| | | | | ES | 2764413 | T3 | 03-06-2020 |
| | | | | HU | E046972 | T2 | 28-04-2020 |
| | | | | PL | 2729525 | T3 | 30-04-2020 |
| | | | | PT | 2729525 | T | 16-01-2020 |
| | | | | TW | 201311799 | A | 16-03-2013 |
| | | | | US | 2014127427 | A1 | 08-05-2014 |
| | | | | WO | 2013007619 | A1 | 17-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014180989 A1
- WO 2017093390 A1
- WO 2020109289 A1
- US 4582816 A
- US 3405109 A
- US 3324093 A
- EP 479186 A
- US 5391654 A
- WO 2006063771 A1
- EP 428054 A1
- EP 1378528 A1
- EP 688794 A
- WO 9951646 A
- WO 0155230 A
- WO 2005118655 A
- EP 810235 A
- WO 2014096296 A
- WO 2016097193 A